# EUROPÄISCHE PATENTSCHRIFT

(11) **EP 3 919 714 B1**
(45) Veröffentlichungstag und Bekanntmachung des Hinweises auf die Patenterteilung: **17.05.2023**
(21) Anmeldenummer: 20178349.5
(22) Anmeldetag: 04.06.2020
(51) Int. Cl.: E06B 7/215, B60J 10/18, E06B 7/28

(54) **DICHTUNG MIT EINER AUTOMATISCH BEWEGBAREN DICHTUNGSLEISTE UND MIT EINER MESSEINRICHTUNG ZUR ERFASSUNG VON DEHNENDEN UND STAUCHENDEN VERFORMUNGEN**
SEAL WITH AN AUTOMATICALLY MOVABLE SEALING STRIP AND WITH A MEASURING DEVICE FOR DETECTING DEFORMATIONS RESULTING FROM TENSION AND COMPRESSION
JOINT D'ÉTANCHÉITÉ DOTÉ D'UNE BAGUETTE D'ÉTANCHÉITÉ MOBILE AUTOMATIQUEMENT ET DOTÉ D'UN DISPOSITIF DE MESURE POUR LA DÉTECTION DES DÉFORMATIONS EN TRACTION ET EN COMPRESSION

(43) Veröffentlichungstag der Anmeldung: 08.12.2021
(73) Patentinhaber: Athmer OHG, 59757 Arnsberg (DE)
(72) Erfinder: Ludwig, Maico, 59494 Soest (DE)
(74) Vertreter: Schäperklaus, Jochen

(56) Entgegenhaltungen:
- EP-A1- 2 921 634
- DE-C1- 10 224 966
- US-A- 4 971 130
- US-A1- 2005 206 095

## Beschreibung

Die vorliegende Erfindung betrifft gemäß Oberbegriff des Anspruchs 1 eine Dichtung mit einer automatisch bewegbaren Dichtungsleiste, mit einem Halter, der an einem Tür- oder Fensterflügel befestigbar ist, mit einem Mechanismus, der mit dem Halter und der Dichtungsleiste verbunden ist, und mit einem Antrieb, mit dem der Mechanismus betätigbar ist, um eine Bewegung der Dichtungsleiste relativ zu dem Halter zu bewirken. So eine Dichtung ist aus EP 2 921 634 A1 bekannt.

Dichtungen mit automatisch bewegbaren Dichtungsleisten, sogenannte automatische Türdichtungen, werden in vielen Gebäuden eingesetzt, um Türen, insbesondere Zimmertüren, Wohnungsabschlusstüren oder Haustüren gegen Luftzug, Rauch und/oder Schall abzudichten. Insbesondere Türen ohne Schwellen können so abgedichtet werden. Meistens wird mit automatischen Dichtungen ein Spalt zwischen dem Türflügel und dem Fußboden abgedichtet. Es sind aber auch Lösungen bekannt, bei denen andere Spalte, zum Beispiel zwischen Türflügel und Türsturz oder Decke abgedichtet werden. Solche Dichtungen können auch bei Fenster oder Toren eingesetzt werden.

Dichtungen, bei denen aufgrund eines Defektes oder einer anderen Funktionsstörung die Dichtungsleiste nicht gegenüber der vorgesehenen Gegenfläche abdichten kann, können Nachteile für den Anwender haben, wie zum Beispiel Rauch- oder Lärmeintrag, Wärmeverluste, Zugerscheinungen usw. Eine Funktionsstörung kann beispielsweise auftreten, wenn die Dichtung fehlerhaft montiert ist oder sich Gegenstände zwischen dem Türblatt und der Gegenfläche befinden. Eine Dichtung, deren Dichtleiste nicht dichtend an der Gegenfläche anliegt, soll daher vermieden werden. Die Dichtungen sollten daher regelmäßig kontrolliert werden. Insbesondere in großen Gebäuden, in denen viele automatische Dichtungen eingesetzt werden, kann diese Kontrolle sehr umfangreich sein und viel Zeit in Anspruch nehmen. Es besteht daher ein Bedarf, das Dichtverhalten der Dichtung einfacher als durch eine manuelle Kontrolle überwachen zu können.

Automatische Türdichtungen können auch einem Einbruchsschutz dienen. Dadurch, dass durch die Dichtungen der Spalt zwischen dem Türflügel und der Gegenfläche geschlossen ist, ist es nicht ohne weiteres möglich, einen Gegenstand, zum Beispiel einen Draht unter dem Türflügel hindurchzuschieben, um diesen dann zum Öffnen der Tür zu nutzen. Allerdings ist es bei vielen automatischen Dichtungen möglich, mit etwas Geschick bei geschlossener Tür die Dichtungsleiste anzuheben oder auch nur ein Elastomerprofil der Dichtungsleiste zu verformen, um dann einen Draht o.a. unter der Tür hindurchzuschieben. Es ist daher wünschenswert, eine Möglichkeit zur Überwachung einer solchen Manipulation zu haben.

Der Erfindung liegt daher das Problem zugrunde, eine Dichtung so weiter zu entwickeln, dass sie einfacher überwacht werden kann, als eine bekannte Dichtung.

Die Aufgabe wird erfindungsgemäß durch eine Dichtung gemäß dem Anspruch 1 gelöst.

Eine erfindungsgemäße Dichtung kann auch mehrere Messeinrichtungen zur Erfassung von dehnenden und stauchenden Verformungen aufweisen.

Beobachtungen haben gezeigt, das Funktionsstörungen der Dichtungen aufgrund von Defekten und Gegenständen in dem Spalt zwischen den gegeneinander abzudichtenden Gegenständen oder Manipulation an Dichtungen zu zumindest vorübergehenden Verformungen an Teilen der Dichtung führen, die sich als Dehnungen oder Stauchungen der Teile der Dichtung zeigen. Werden solche Dehnungen oder Stauchungen durch eine erfindungsgemäße Messeinrichtung detektiert, kann das eine Überwachung der Dichtung ermöglichen, die eine regelmäßige manuelle Kontrolle der Dichtungen entbehrlich macht oder das Feststellen von möglicherweise vorübergehenden Manipulationen ermöglicht.

Bei dem Halter kann es sich um ein Dichtungsgehäuse handeln.

Die Messeinrichtung einer erfindungsgemäßen Dichtung weist wenigstens einen Sensor zur Erfassung von dehnenden und stauchenden Verformungen auf, der in oder an der Dichtungsleiste angeordnet sein kann. Es ist möglich, dass die Messeinrichtung mehrere Sensoren aufweist, die an verschiedenen Stellen der Dichtung angeordnet sind. Diese Sensoren können an oder in verschiedenen Abschnitten eines Bauteils der Dichtung und/oder an oder in verschiedenen Bauteilen der Dichtung angeordnet sein. So ist es möglich, Dehnungen und/oder Stauchungen an verschiedenen Stellen der Dichtung zu überwachen.

Der wenigstens eine Sensor der Messeinrichtung kann ein Dehnungsmessstreifen sein.

Die Dichtungsleiste kann ein Elastomerprofil und eine Halteleiste aufweisen, an der das Elastomerprofil befestigt ist. Der Sensor kann oder die Sensoren können in oder an dem Elastomerprofil oder in oder an der Halteleiste angeordnet sein. Es insbesondere auch möglich, dass der oder die Sensoren an oder in einem Teil des Mechanismus angeordnet ist.

Der Sensor kann zum Beispiel an dem Elastomerprofil angeklebt sein. Der Sensor könnte ebenso in dem Elastomerprofil eingespritzt sein oder das Elastomerprofil könnte an den Sensor angespritzt sein.

Wenn eine Messeinrichtung einer erfindungsgemäßen Dichtung mehrere Sensoren aufweist, können diese in einer Längsrichtung der Dichtungsleiste nebeneinander angeordnet sein. Sind mehrere Sensoren vorgesehen, ist es möglich Dehnungen und/oder Stauchungen einem Ort der Dichtung zuzuweisen. Damit kann es möglich sein, eine bessere örtliche Fehlerlokalisierung zu erhalten, was gegebenenfalls ein gezielteres Eingreifen eines Anwenders möglich macht.

Jeder Sensor kann Teil einer Messbrücke sein. Es kann sich dabei um eine Vollbrücke oder eine Halbbrücke handeln. In der Messbrücke können mehrere Sensoren vorgesehen sein.

Eine erfindungsgemäße Dichtung kann ein Kommunikationsmittel aufweisen, das zur Übertragung von Messergebnissen von der Messeinrichtung zu einer Einrichtung außerhalb der Dichtung mit der Messeinrichtung verbunden werden kann. Es kann sich dabei insbesondere um ein Kommunikationsmittel zur drahtlosen Kommunikation handeln. Für die Kommunikation können bekannte Kommunikationsprotokolle genutzt werden, insbesondere solche, die auch im Bereich Haustechnik genutzt werden.

Die Dichtung kann ein Mittel zur Erzeugung von elektrischer Energie aufweisen, das bei einer Betätigung des Mechanismus elektrische Energie zur Versorgung der Messeinrichtung oder von Teilen der Messeinrichtung und/oder zur Versorgung des Kommunikationsmittels mit elektrischer Energie gewinnt. Damit ist ein autarker, von äußeren Energiequellen unabhängiger Betrieb der Messeinrichtung möglich. Selbstverständlich ist es aber möglich, dass eine erfindungsgemäße Dichtung mit einer äußeren, elektrischen Energiequelle verbunden ist.

Das Mittel zur Erzeugung elektrischer Energie kann ein Piezoelement sein.

Eine erfindungsgemäße Dichtung kann einen Energiespeicher für elektrische Energie aufweisen. Ein solcher Energiespeicher kann ein Akkumulator oder ein Kondensator sein. Der Energiespeicher kann mit einer äußeren Energiequelle und/oder mit dem Mittel zur Erzeugung von elektrischer Energie verbunden sein, so dass elektrische Energie aus der äußeren Quelle und/oder dem Mittel zur Erzeugung von elektrischer Energie in den Energiespeicher gespeichert werden kann.

Weitere Merkmale und Vorteile der vorliegenden Erfindung werden deutlich anhand der nachfolgenden Beschreibung eines Ausführungsbeispiels unter Bezugnahme auf die beiliegende Zeichnung. Darin zeigt:

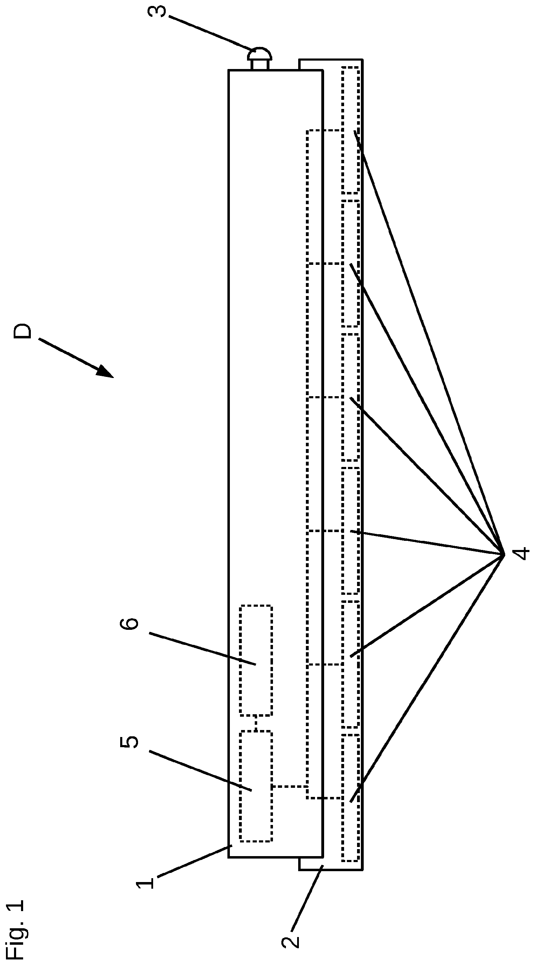

- Fig. 1: eine schematische Darstellung einer erfindungsgemäßen Dichtung.

Die in der Fig. 1 dargestellte Dichtung D weist ein Gehäuse 1 als Halter auf. Das Gehäuse 1 ist aus einem im Wesentlichen U-förmigen Profil hergestellt, wie es von automatischen Türdichtungen bekannt ist. Es kann zum Beispiel in einer Nut an einem unteren Ende eines Türflügels befestigt werden. Mit der Dichtung kann dann ein Spalt zwischen dem Türflügel und einem Fußboden abgedichtet werden.

Über einen nicht dargestellten Mechanismus ist eine Dichtungsleiste bewegbar in dem Gehäuse angeordnet. Die Dichtungsleiste weist eine Halteschiene und ein Elastomerprofil als Dichtungsprofil 3 auf. Nur letzteres ist in der Figur dargestellt. Die Dichtung D weist einen Auslöser 3 auf, über den eine Kraft in den Mechanismus eingeleitet werden kann, um die Dichtungsleiste gegenüber dem Gehäuse 1 aus einer Freigabeposition, in der der Spalt zwischen dem Türflügel und dem Fußboden nicht abgedichtet ist, in eine Dichtposition zu bewegen, in der der Spalt abgedichtet ist. Ist die Dichtungsleiste in der Dichtposition, wird das Dichtungsprofil 2 gegen den Fußboden gedrückt. Dadurch kommt es zu typischen Dehnungen und/oder Stauchungen in dem Dichtungsprofil 2.

In dem Dichtungsprofil 2 sind in seiner Längsrichtung nebeneinander mehrere, insgesamt sechs Dehnungsmessstreifen 4 angeordnet. Mit diesen Dehnungsmessstreifen 4 können die Dehnungen und/oder Stauchungen detektiert werden, die das Dichtungsprofil 2 erfährt, wenn es auf den Fußboden abgesenkt wird.

Die Dehnungsmessstreifen 4 sind mit einem Auswertemittel 5 verbunden. Die Dehnungsmessstreifen 4 und das Auswertemittel 5 sind Teile einer Messeinrichtung zur Erfassung von dehnenden und stauchenden Verformungen des Dichtungsprofils 2.

Wenn sich nun die Dichtungsleiste in der Dichtstellung befindet, wird das Dichtungsprofil 2, falls keine außergewöhnliche Situation vorliegt, über seine gesamte Länge gegen den Fußboden gedrückt, was die genannten typischen Dehnungen und/oder Stauchungen in dem Dichtungsprofil hervorruft. Diese Dehnungen und/oder Stauchungen sind bei im Normalfall gleichen oder fast gleichen äußeren Bedingen und einwandfrei funktionierender Dichtung gleich oder fast gleich. Die Dehnungsmessstreifen liefern aufgrund der gleichen oder fast gleichen Dehnungen und/oder Stauchungen für den Normalfall, in dem keine außergewöhnliche Situation vorliegt, gleiche oder fast gleiche Messwerte, die typisch für den Normalfall sind.

Liegt dagegen aufgrund eines Defektes der Dichtung oder aufgrund einer anderen Ursache eine außergewöhnlicher Situation vor, beispielweise wenn ein Gegenstand in dem Spalt zwischen dem Türflügel und dem Fußboden liegt oder in den Spalt nach dem Absenken des Dichtungsprofil 2 hineingeschoben ist, ist das Dichtungsprofil 2 anders gedehnt und/oder gestaucht als im Normalfall. Das führt zu von dem im Normalfall vorliegenden typischen Messergebnissen abweichenden Messergebnissen, die von der Messeinrichtung 4, 5 bereitgestellt werden. Diese abweichenden Messergebnisse können über ein Kommunikationsmittel 6 an eine äußere Einheit übertragen werden, in der diese Abweichung festgestellt werden kann und die dann weiter gemeldet werden kann. Die Einheit zum Feststellen der Abweichung könnte auch in der Dichtung, zwischen die Messeinrichtung 4, 5 und das Kommunikationsmittel 6 geschaltet angeordnet sein. Dann kann die Abweichung über das Kommunikationsmittel 6 nach außen gemeldet werden.

## Patentansprüche

1. Dichtung (D) mit einer automatisch bewegbaren Dichtungsleiste, mit einem Halter (1), der an einem Tür- oder Fensterflügel befestigbar ist, mit einem Mechanismus, der mit dem Halter (1) und der Dichtungsleiste verbunden ist, und mit einem Antrieb, mit dem der Mechanismus betätigbar ist, um eine Bewegung der Dichtungsleiste relativ zu dem Halter (1) zu bewirken,
**dadurch gekennzeichnet, dass**
die Dichtung eine Messeinrichtung (4, 5) zur Erfassung von dehnenden und stauchenden Verformungen an Teilen der Dichtung aufweist, und dass die Messeinrichtung (4, 5) wenigstens einen Sensor (4) zur Erfassung von den dehnenden und stauchenden Verformungen aufweist, um die Dichtung zu überwachen.

2. Dichtung nach Anspruch 1, **dadurch gekennzeichnet, dass** der wenigstens eine Sensor (4) in oder an der Dichtungsleiste angeordnet ist.

3. Dichtung nach Anspruch 2, **dadurch gekennzeichnet, dass** der wenigstens eine Sensor (4) ein Dehnungsmessstreifen ist.

4. Dichtung nach Anspruch 2 oder 3, **dadurch gekennzeichnet, dass** die Dichtungsleiste ein Elastomerprofil (5) und eine Halteleiste aufweist, an der das Elastomerprofil (5) befestigt ist, und dass der Sensor (4) in oder an dem Elastomerprofil (5) oder in oder an der Halteleiste angeordnet ist.

5. Dichtung nach Anspruch 4, **dadurch gekennzeichnet, dass** der Sensor (4) an dem Elastomerprofil (5) angeklebt ist.

6. Dichtung nach Anspruch 4, **dadurch gekennzeichnet, dass** der Sensor (4) in dem Elastomerprofil (5) eingespritzt ist.

7. Dichtung nach Anspruch 2 oder 3, **dadurch gekennzeichnet, dass** die Messeinrichtung (4, 5) mehrere Sensoren (4) aufweist, die in einer Längsrichtung der Dichtungsleiste nebeneinander angeordnet sind.

8. Dichtung nach einem der Ansprüche 2 bis 5, **dadurch gekennzeichnet, dass** jeder Sensor (4) Teil einer Messbrücke ist.

9. Dichtung nach einem der Ansprüche 1 bis 8, **dadurch gekennzeichnet, dass** die Dichtung ein Kommunikationsmittel aufweist, das zur Übertragung von Messergebnissen von der Messeinrichtung (4, 5) zu einer Einrichtung außerhalb der Dichtung mit der Messeinrichtung (4, 5) verbunden ist.

10. Dichtung nach einem der Ansprüche 1 bis 9, **dadurch gekennzeichnet, dass** die Dichtung ein Mittel zur Erzeugung von elektrischer Energie aufweist, dass bei einer Betätigung des Mechanismus elektrische Energie zur Versorgung der Messeinrichtung (4, 5) oder von Teilen der Messeinrichtung (4, 5) und/oder zur Versorgung des Kommunikationsmittels mit elektrischer Energie gewinnt.

11. Dichtung nach Anspruch 10, **dadurch gekennzeichnet, dass** das Mittel zur Erzeugung elektrischer Energie ein Piezoelement ist.

12. Dichtung nach Anspruch 10 oder 11, **dadurch gekennzeichnet, dass** die Dichtung einen Energiespeicher für elektrische Energie aufweist.

13. Dichtung nach Anspruch 12, **dadurch gekennzeichnet, dass** der Energiespeicher ein Akkumulator oder ein Kondensator ist.

## Claims

1. Seal (D) having an automatically movable sealing bar, having a holder (1) which can be fastened to a door or window leaf, having a mechanism which is connected with the holder (1) and the sealing bar, and having a drive with which the mechanism can be operated in order to effect a movement of the sealing bar relative to the holder (1), **characterised in that**
the seal has a measuring apparatus (4, 5) for capturing stretching and compressing deformations on parts of the seal, and that the measuring apparatus (4, 5) has at least one sensor (4) for the capture of stretching and compressing deformations, in order to monitor the seal.

2. Seal according to claim 1, **characterised in that** the at least one sensor (4) is arranged in or on the sealing bar.

3. Seal according to claim 2, **characterised in that** the at least one sensor (4) is a strain gauge.

4. Seal according to claim 2 and 3, **characterised in that** sealing bar has an elastomer profile (5) and a holding strip to which the elastomer profile (5) is fastened, and that the sensor (4) is arranged in or on the elastomer profile (5) or in or on the holding strip.

5. Sealed according to claim 4, **characterised in that** the sensor (4) is adhesively bonded to the elastomer profile (5).

6. Seal according to claim 4, **characterised in that** the sensor (4) is injected into the elastomer profile (5).

7. Seal according to claim 2 or 3, **characterised in that** the measuring apparatus (4, 5) has several sensors (4) which are arranged in a longitudinal direction of the sealing bar next to one another.

8. Seal according to any of claims 2 to 5, **characterised in that** every sensor (4) is part of a sensor bridge.

9. Seal according to any of claims 1 to 8 **characterised in that** the seal has a communication means which is connected to the measuring apparatus (4, 5) for transmitting measurement results from the measuring apparatus (4, 5) to an apparatus outside the seal.

10. Seal according to any of claims 1 to 9, **characterised in that** the seal has a means for generating electrical energy which obtains electrical energy for supplying the measuring apparatus (4, 5) or parts of the measuring apparatus (4, 5), and/or for supplying electrical energy to the communication means, when the mechanism is operated.

11. Seal according to claim 10, **characterised in that** the means of generating electrical energy is a piezo element.

12. Seal according to claim 10 or 11, **characterised in that** the seal has an energy store for electrical energy.

13. Seal according to claim 12, **characterised in that** the energy store is an accumulator or a capacitor.

## Revendications

1. Joint d'étanchéité (D) avec une bande d'étanchéité mobile automatique, avec un support (1) qui peut être fixé sur un battant de porte ou de fenêtre, avec un mécanisme qui est relié au support (1) et à la bande d'étanchéité, et avec un entraînement avec lequel le mécanisme peut être actionné pour générer un mouvement de la bande d'étanchéité par rapport au support (1), **caractérisé en ce que**
le joint d'étanchéité présente un appareil de mesure (4, 5) pour détecter des déformations d'extension et de compression sur des parties du joint d'étanchéité, et **en ce que** l'appareil de mesure (4, 5) présente au moins un capteur (4) pour détecter les déformations d'extension et de compression afin de surveiller le joint d'étanchéité.

2. Joint d'étanchéité selon la revendication 1, **caractérisé en ce que** le au moins un capteur (4) est agencé dans ou sur la bande d'étanchéité.

3. Joint d'étanchéité selon la revendication 2, **caractérisé en ce que** ledit au moins un capteur (4) est une jauge de contrainte.

4. Joint d'étanchéité selon la revendication 2 ou 3, **caractérisé en ce que** la bande d'étanchéité présente un profilé élastomère (5) et une barre de retenue à laquelle le profilé élastomère (5) est fixé, et **en ce que** le capteur (4) est agencé dans ou sur le profilé élastomère (5) ou dans ou sur la barre de retenue.

5. Joint d'étanchéité selon la revendication 4, **caractérisé en ce que** le capteur (4) est collé sur le profilé élastomère (5).

6. Joint d'étanchéité selon la revendication 4, **caractérisé en ce que** le capteur (4) est injecté dans le profilé élastomère (5).

7. Joint d'étanchéité selon la revendication 2 ou 3, **caractérisé en ce que** l'appareil de mesure (4, 5) présente plusieurs capteurs (4) qui sont agencés les uns à côté des autres dans une direction longitudinale de la bande d'étanchéité.

8. Joint d'étanchéité selon l'une quelconque des revendications 2 à 5, **caractérisé en ce que** chaque capteur (4) fait partie d'un pont de mesure.

9. Joint d'étanchéité selon l'une quelconque des revendications 1 à 8, **caractérisé en ce que** le joint d'étanchéité présente un moyen de communication qui est relié à l'appareil de mesure (4, 5) pour transmettre les résultats de mesure de l'appareil de mesure (4, 5) à un appareil extérieur au joint d'étanchéité.

10. Joint d'étanchéité selon l'une quelconque des revendications 1 à 9, **caractérisé en ce que** le joint d'étanchéité présente un moyen de production d'énergie électrique qui, lors d'un actionnement du mécanisme, produit de l'énergie électrique pour alimenter l'appareil de mesure (4, 5) ou des parties de l'appareil de mesure (4, 5) et/ou pour alimenter le moyen de communication en énergie électrique.

11. Joint d'étanchéité selon la revendication 10, **caractérisé en ce que** le moyen de génération d'énergie électrique est un élément piézoélectrique.

12. Joint d'étanchéité selon la revendication 10 ou 11, **caractérisé en ce que** le joint d'étanchéité présente un réservoir d'énergie pour l'énergie électrique.

13. Joint d'étanchéité selon la revendication 12, **caractérisé en ce que** le réservoir d'énergie est un accumulateur ou un condensateur.
